# EUROPEAN PATENT SPECIFICATION

(11) **EP 3 617 021 B1**
(45) Date of publication and mention of the grant of the patent: **10.05.2023**
(21) Application number: 18191025.8
(22) Date of filing: 27.08.2018
(51) Int. Cl.: B60W 30/18

(54) **PERFORMING A MERGING MANEUVER OF AN AUTOMATED VEHICLE**
DURCHFÜHREN EINES SPURWECHSELMANÖVERS EINES AUTOMATISIERTEN FAHRZEUGS
EFFECTUER UN MANOEUVRE DE CHANGEMENT DE VOIE D'UN VÉHICULE AUTOMATISÉ

(43) Date of publication of application: 04.03.2020
(73) Proprietor: Bayerische Motoren Werke Aktiengesellschaft, 80809 München (DE)
(72) Inventor: Hubmann, Constantin, 80469 München (DE); Dr. Althoff, Daniel, 80807 München (DE); Schulz, Jens, 80469 München (DE)

(56) References cited:
- DE-A1-102009 007 885
- DE-A1-102015 219 934
- US-A1- 2016 304 097
- US-A1- 2018 065 623
- US-A1- 2018 170 388

## Description

This invention relates to a system and a method for performing a merging maneuver of an automated vehicle.

An automated vehicle is a vehicle with automated longitudinal guidance and/or automated lateral guidance. The term "automated vehicle" also comprises an autonomous vehicle. The term "automated vehicle" comprises in particular a vehicle with an arbitrary level of automation, for example the levels of automation that are defined in the standard SAE J3016 (SAE - Society of Automotive Engineering):
Level 0: Automated system issues warnings and may momentarily intervene but has no sustained vehicle control.
Level 1 ("hands on"): The driver and the automated system share control of the vehicle. Examples are Adaptive Cruise Control (ACC), where the driver controls steering and the automated system controls speed; and Parking Assistance, where steering is automated while speed is under manual control. The driver must be ready to retake full control at any time. Lane Keeping Assistance (LKA) Type II is a further example of level 1 self-driving.
Level 2 ("hands off"): The automated system takes full control of the vehicle (accelerating, braking, and steering). The driver must monitor the driving and be prepared to intervene immediately at any time if the automated system fails to respond properly. The shorthand "hands off" is not meant to be taken literally. In fact, contact between hand and wheel is often mandatory during SAE 2 driving, to confirm that the driver is ready to intervene.
Level 3 ("eyes off"): The driver can safely turn their attention away from the driving tasks, e.g. the driver can text or watch a movie. The vehicle will handle situations that call for an immediate response, like emergency braking. The driver must still be prepared to intervene within some limited time, specified by the manufacturer, when called upon by the vehicle to do so.
Level 4 ("mind off"): As level 3, but no driver attention is ever required for safety, i.e. the driver may safely go to sleep or leave the driver's seat. Self-driving is supported only in limited spatial areas (geofenced) or under special circumstances, like traffic jams. Outside of these areas or circumstances, the vehicle must be able to safely abort the trip, i.e. park the car, if the driver does not retake control.
Level 5 ("steering wheel optional"): No human intervention is required at all. An example would be a robotic taxi.

The state of the art in performing merging maneuvers for automated vehicles is using trajectory planning to plan a trajectory, which moves the automated vehicle into a detected gap between other road users on an adjacent lane, the detected gap being suitable for the automated vehicle.

However, the state of the art approaches for merging maneuvers cannot handle traffic situations, in which there is no suitable gap between other road users on the adjacent lane.

Further state of the art documents are US 2018/170388 A1, DE 10 2015 219934 A1 and US 2016/304097 A1.

Therefore, the purpose of the invention is describe a system and a method that are able to perform a merging maneuver for the automated vehicle in a traffic situation, in which there is no suitable gap between other road users on the adjacent lane.

One aspect of the invention describes a system for performing a merging maneuver of an automated vehicle, with the automated vehicle merging from a current lane into an adjacent lane, with the merging maneuver requiring at least one other road user on the adjacent lane to yield to the automated vehicle.

The at least one other road user is in particular required to yield to the automated vehicle to increase the size of a gap between the at least one other road user and an additional road user. The gap may initially be too small for the automated vehicle to move into it, however the at least one other road user may increase the size of the gap by yielding to the automated vehicle, for example by decreasing its velocity.

Said system is configured to detect the at least one other road user on the adjacent lane, in particular by using at least one sensor that is comprised by the automated vehicle, for example a camera, radar or lidar.

Moreover, said system is configured to guide the automated vehicle in such a way that the at least one other road user understands that the automated vehicle intends to merge in front of the at least one other road user and said system is configured to determine if the at least one other road user yields to the automated vehicle.

The system is in particular configured to guide the automated vehicle in such a way that the at least one other road user understands that the automated vehicle intends to merge in front of the at least one other road user by guiding the automated vehicle in longitudinal direction at least up to the same level as the at least one other road user, and/or by guiding the automated vehicle laterally in the current lane in direction of the adjacent lane.

Guiding the automated vehicle in longitudinal direction at least up to the same level as the at least one other road user and guiding the automated vehicle laterally in the current lane in direction of the adjacent lane are both typical maneuvers of human drivers to show their intention, to merge into the adjacent lane.

By porting these typical maneuvers of human drivers to the automated vehicle, it is very likely that the at least one other road user understands the intention of the automated vehicle and reacts on it.

In particular, said system is configured to guide the automated vehicle in such a way that the automate vehicle is able to perform at least two subsequent maneuvers without colliding with an obstacle, e.g. an other road user. Examples for these at least two subsequent maneuvers for the automated are a merging maneuver in front of the other road user, staying in the current lane and/or merging behind the other road user.

Said system is in particular configured to determine of the at least one other road user yields to the automated vehicle by detecting changes in the driving behavior of the at least one other road user, for example by detecting a decreasing velocity of the at least one other road user.

Additionally, said system is configured to guide the automated vehicle to merge in front of the at least one other road user, if it is determined that the at least one other road user yields to the automated vehicle.

In a preferred embodiment, the system is configured to detect a second other road user, with the second other road user following the at least one other road user, if it is determined that the at least one other road user does not yield to the automated vehicle.

The system is configured to guide the automated vehicle in such a way that the second other road user understands that the automated vehicle intends to merge in front of the second other road user and the system is configured to determine if the second other road user yields to the automated vehicle.

Moreover, the system is configured to guide the automated vehicle to merge in front of the second other road user, if it is determined that the second other road user yields to the automated vehicle.

In this preferred embodiment, the second other road user is taking over the position of the at least one other road user, if the at least one other road user does not yield to the automated vehicle.

The system is configured evaluate at least two guidance actions for the automated vehicle. The at least two guidance actions are in particular selected from a finite set of guidance actions, for example from the set consisting of "keep lane", "switch lane", "increase velocity", "decrease velocity" and "keep velocity". The evaluation is in particular a determination of a cost or gain value for each of the guidance action.

Moreover, the system is configured to select one guidance action of the evaluated guidance actions considering the evaluation. For example, the system may select the "cheapest" guidance action considering the cost values of each guidance function.

In particular, the system is configured to select a first guidance action, which is more likely to trigger a reaction from the at least one other road user than at least one other second guidance action. The likeliness that a guidance action will trigger a reaction from the at least one other road user may be determined by use of empirical data.

In particular, the system is configured to evaluate the guidance actions by considering at least one of the following parameters:
- a reference velocity of the current lane,
- a reference velocity of the adjacent lane,
- a desired lane of the automated vehicle, with the desired lane being either the current lane or the adjacent lane,
- a distance to an end of the current lane,
- a lateral deviation of the automated vehicle from the center of the current lane,
- a lateral deviation of the automated vehicle from the center of the adjacent lane,
- an expected number of actions required for the overall merging maneuver, and/or
- a collisions of the automated vehicle with the at least one other road user.

At least one of these parameters can be used to build a cost function for evaluating the guidance actions. The actual values of the parameters to evaluate the guidance actions can in particular be determined by analyzing merging maneuvers of human drivers. For example, the position of the vehicle of the human driver during a merging maneuver can be analyzed. It is possible to identify the position(s) of the vehicle of the human driver, which is most likely to trigger a reaction by the other road user, with the reaction indicating whether the other road user will yield to the vehicle of the human driver or not.

Additionally, the system is configured to guide the automated vehicle in such a way that the at least one other road user understands that the automated vehicle intends to merge in front of the at least one other road user by performing the selected guidance action.

In another preferred embodiment, the system is configured to predict a future behavior of the at least one other road user for at least one future point in time considering at least a virtual future guidance action of the automated vehicle.

The system is also configured to evaluate the at least one virtual guidance action considering the predicted future behavior of the at least one other road user (for example by applying a cost function that is similar to the cost function used to evaluate the guidance actions), and configured to evaluate a guidance action considering at least one virtual guidance action that may follow on that action in a future point in time.

In particular, the system is configured to predict the future behavior of the at least one other road user by selecting a guidance action from a finite set of other road user guidance actions.

In particular, the system is configured to predict the future behavior of the at least one other road user for at least one first future point in time by selecting a guidance action from a finite set of other road user guidance actions, and the system is configured to predict the future behavior of the at least one other road user for at least one second future point in time, where the at least one second future point in time is following on the at least one first future point time, by assuming that the at least one other road user is moving with a constant velocity.

The assumption that the at least one other road user is moving with a constant velocity helps to reduce the computational complexity of the approach.

In another preferred embodiment, the system is configured to evaluate the guidance actions at least two times, with the predicted future behavior of the at least one other road user differing in at least one future point in time, and/or with the virtual future guidance action of the automated vehicle differing in at least one future point in time; and the system is configured to select a guidance action considering at least two evaluations of the guidance actions.

For example, if the guidance actions are evaluated using a cost function, the actual cost value for each guidance action can be the sum, mean or median of every evaluation of same guidance action.

The approach described above, which continuously aims at finding an optimal guidance action for the automated vehicle, has various advantages over conventional rule-based planning algorithms for performing merging maneuvers.

In a complex traffic situation, a great many different aspects of the complex traffic situation have to be considered by the conventional rule-based planning algorithm, for example road characteristics, various numbers of other road users and various configurations of gaps between the other road users. All of these aspects are considered implicitly but by the approach above, but not explicitly. The approach described above still achieves at least comparable results as the conventional rule-based planning algorithm. Moreover, a conventional rule-based planning algorithm requires the definition of all rules and actions before the algorithm is actually deployed in an automated vehicle. As opposed to this, the approach described above, which continuously aims at finding an optimal guidance action for the automated vehicle, finds solutions to the different aspects of the complex traffic situation implicitly. It is not required to specify these solutions explicitly.

A second aspect of the invention is a method for performing a merging maneuver of an automated vehicle, with the automated vehicle merging from a current lane into an adjacent lane, with the merging maneuver requiring at least one other road user on the adjacent lane to yield to the automated vehicle.

One step of the method is detecting the at least one other road user on the adjacent lane.

Further steps are evaluating at least two guidance actions for the automated vehicle and selecting one guidance action of the evaluated guidance actions considering the evaluation.

Another step of the method is guiding the automated vehicle in such a way that the at least one other road user understands that the automated vehicle intends to merge in front of the at least one other road user by performing the selected guidance action.

Another step of the method is determining if the at least one other road user yields to the automated vehicle.

Another step of the method is guiding the automated vehicle to merge in front of the at least one other road user, if it is determined that the at least one other road user yields to the automated vehicle.

For a better understanding of the present invention, and to show how the same may be carried into effect, reference will now be made, by way of example, to the accompanying drawing, in which:
- Fig. 1: shows an exemplified traffic situation and an application of the invention, and
- Fig. 2: shows a diagrammatic overview of guidance actions of an automated vehicle and future behaviors of another road user.

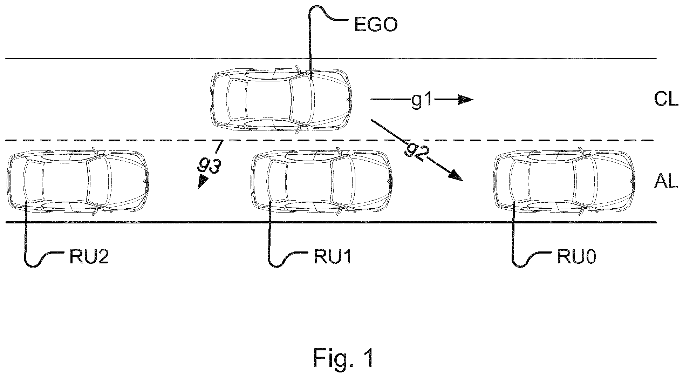

Fig. 1 shows an exemplified traffic situation and an application of the invention, in which an automated vehicle EGO comprises a system for performing a merging maneuver of the automated vehicle EGO, with the automated vehicle EGO merging from a current lane CL into an adjacent lane AL, with the merging maneuver requiring at least one other road user RU1 on the adjacent lane AL to yield to the automated vehicle EGO.

The at least one other road user RU1 is required to yield to the automated vehicle EGO, because the gap between the at least one other road user RU1 and the road user RU0, as well as the gap between the at least one other road user RU1 and the road user RU2 are too small for the automated vehicle to plan a conventional merging trajectory.

Said system is configured to detect the at least one other road user RU1 on the adjacent lane AL and to guide g1 the automated vehicle EGO in such a way that the at least one other road user RU1 understands that the automated vehicle EGO intends to merge in front of the at least one other road user RU1.

In particular, said system is configured to guide g1 the automated vehicle EGO in such a way that the at least one other road user RU1 understands that the automated vehicle EGO intends to merge in front of the at least one other road user RU1 by guiding the automated vehicle EGO in longitudinal direction at least up to the same level as the at least one other road user RU1, and/or by guiding the automated vehicle EGO laterally in the current lane CL in direction of the adjacent lane AL.

Moreover, said system is configured to determine if the at least one other road user RU1 yields to the automated vehicle EGO; and to guide g2 the automated vehicle EGO to merge in front of the at least one other road user RU1, if it is determined that the at least one other road user RU1 yields to the automated vehicle EGO.

If it is determined that the at least one other road user RU1 does not yield to the automated vehicle EGO, said system is configured to detect a second other road user RU2, with the second other road user RU2 following the at least one other road user RU1 and to guide g1 the automated vehicle EGO in such a way that the second other road user RU2 understands that the automated vehicle EGO intends to merge in front of the second other road user RU2.

In particular, said system is configured to guide g1 the automated vehicle EGO in such a way that the second other road user RU2 understands that the automated vehicle EGO intends to merge in front of the second other road user RU2 by guiding the automated vehicle EGO in longitudinal direction at least up to the same level as the second other road user RU2, and/or by guiding the automated vehicle EGO laterally in the current lane CL in direction of the adjacent lane AL.

Moreover, said system is configured to determine if the second other road user RU2 yields to the automated vehicle EGO; and to guide g3 the automated vehicle EGO to merge in front of the second other road user RU2, if it is determined that the second other road user RU2 yields to the automated vehicle EGO.

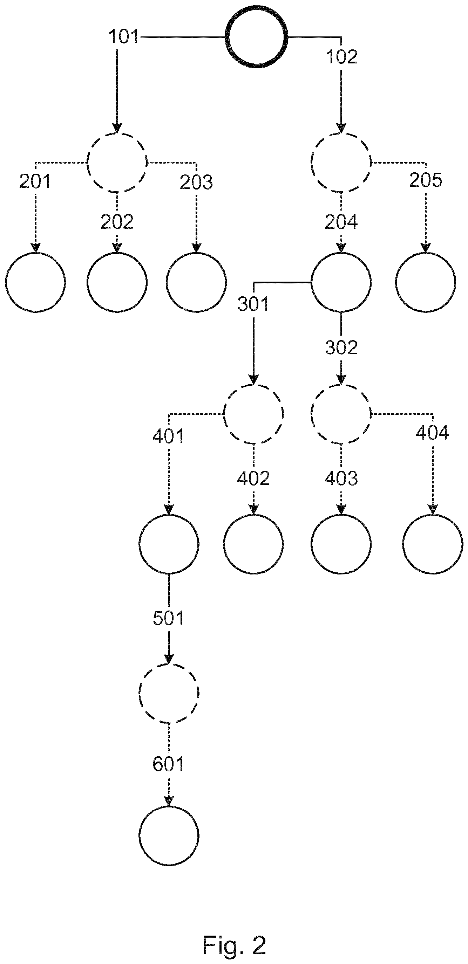

Fig. 2 shows a diagrammatic overview of guidance actions of an automated vehicle EGO and future behaviors of at least one other road user RU1.

A system for performing a merging maneuver of an automated vehicle EGO, with the automated vehicle EGO merging from a current lane CL into an adjacent lane AL, with the merging maneuver requiring at least one other road user RU1 on the adjacent lane AL to yield to the automated vehicle EGO, is configured to detect the at least one other road user RU1 on the adjacent lane AL and to guide g1 the automated vehicle EGO in such a way that the at least one other road user RU1 understands that the automated vehicle EGO intends to merge in front of the at least one other road user RU1.

Moreover, said system is configured to determine if the at least one other road user RU1 yields to the automated vehicle EGO and to guide g2 the automated vehicle EGO to merge in front of the at least one other road user RU1, if it is determined that the at least one other road user RU1 yields to the automated vehicle EGO.

The system is in particular configured to evaluate at least two guidance actions 101, 102 for the automated vehicle EGO and to select one guidance action 101 of the evaluated guidance actions 101, 102 considering the evaluation.

In particular, the system is configured to evaluate the guidance actions 101, 102 by considering at least one of the following:
- a reference velocity of the current lane CL,
- a reference velocity of the adjacent lane AL,
- a desired lane CL, AL of the automated vehicle EGO, with the desired lane CL, AL being either the current lane CL or the adjacent lane AL,
- a distance to an end of the current lane CL,
- a lateral deviation of the automated vehicle EGO from the center of the current lane CL,
- a lateral deviation of the automated vehicle EGO from the center of the adjacent lane AL,
- an expected number of actions required for the overall merging maneuver, and/or
- a collisions of the automated vehicle EGO with the at least one other road user RU1.

The system is in particular configured to select a first guidance action 101, which is more likely to trigger a reaction from the at least one other road user RU1 than at least one other second guidance action 102.

Additionally, the system is configured to guide g1 the automated vehicle EGO in such a way that the at least one other road user RU1 understands that the automated vehicle EGO intends to merge in front of the at least one other road user RU1 by performing the selected guidance action 101.

Moreover, the system is configured to predict a future behavior 401, 402, 403, 404 of the at least one other road user RU1 for at least one future point in time considering at least a virtual future guidance action 301, 302 of the automated vehicle EGO, to evaluate the at least one virtual guidance action 301, 302 considering the predicted future behavior 401, 402, 403, 404 of the at least one other road user RU1, and to evaluate a guidance action 102 considering at least one virtual guidance action 301, 302 that may follow on that action 102 in a future point in time.

The system may also be configured to predict the future behavior 401, 402, 403, 404 of the at least one other road user RU1 by selecting a guidance action from a finite set of other road user guidance actions, which may be similar to the guidance actions 101, 102 of the automated vehicle EGO. Additionally, the system is configured to predict the future behavior 401, 402, 403, 404 of the at least one other road user RU1 for at least one first future point in time by selecting a guidance action from a finite set of other road user guidance actions, and to predict the future behavior 601 of the at least one other road user RU1 for at least one second future point in time, where the at least one second future point in time is following on the at least one first future point time, by assuming that the at least one other road user RU1 is moving with a constant velocity.

Moreover, the system is configured to evaluate the guidance actions 101, 102 at least two times, with the predicted future behavior 401, 402, 403, 404, 601 of the at least one other road user RU1 differing in at least one future point in time, and/or with the virtual future guidance action 301, 302, 501 of the automated vehicle EGO differing in at least one future point in time, and to select a guidance action 101, 102 considering at least two evaluations of the guidance actions 101, 102.

## Claims

1. A system for performing a merging maneuver of an automated vehicle (EGO), with the automated vehicle (EGO) merging from a current lane (CL) into an adjacent lane (AL), with the merging maneuver requiring at least one other road user (RU1) on the adjacent lane (AL) to yield to the automated vehicle (EGO), said system configured to:
• detect the at least one other road user (RU1) on the adjacent lane (AL);
• evaluate at least two guidance actions (101, 102) for the automated vehicle (EGO);
• select one guidance action (101) of the evaluated guidance actions (101, 102) considering the evaluation;
• guide (g1) the automated vehicle (EGO) in such a way that the at least one other road user (RU1) understands that the automated vehicle (EGO) intends to merge in front of the at least one other road user (RU1) by performing the selected guidance action (101);
• determine if the at least one other road user (RU1) yields to the automated vehicle (EGO); and
• guide (g2) the automated vehicle (EGO) to merge in front of the at least one other road user (RU1), if it is determined that the at least one other road user (RU1) yields to the automated vehicle (EGO).

2. A system according to claim 1 with the system configured to:
• detect a second other road user (RU2), with the second other road user (RU2) following the at least one other road user (RU1), if it is determined that the at least one other road user (RU1) does not yield to the automated vehicle (EGO);
• guide (g1) the automated vehicle (EGO) in such a way that the second other road user (RU2) understands that the automated vehicle (EGO) intends to merge in front of the second other road user (RU2);
• determine if the second other road user (RU2) yields to the automated vehicle (EGO); and
• guide (g3) the automated vehicle (EGO) to merge in front of the second other road user (RU2), if it is determined that the second other road user (RU2) yields to the automated vehicle (EGO).

3. A system according to any of the previous claims, with the system configured to:
• guide (g1) the automated vehicle (EGO) in such a way that the at least one other road user (RU1) understands that the automated vehicle (EGO) intends to merge in front of the at least one other road user (RU1) by guiding the automated vehicle (EGO) in longitudinal direction at least up to the same level as the at least one other road user (RU1).

4. A system according to any of the previous claims, with the system configured to:
• guide (g1) the automated vehicle (EGO) in such a way that the at least one other road user (RU1) understands that the automated vehicle (EGO) intends to merge in front of the at least one other road user (RU1) by guiding the automated vehicle (EGO) laterally in the current lane (CL) in direction of the adjacent lane (AL).

5. A system according to any of the previous claims, with the system configured to:
• select a first guidance action (101), which is more likely to trigger a reaction from the at least one other road user (RU1) than at least one other second guidance action (102).

6. A system according to any of the previous claims, with the system configured to:
• evaluate the guidance actions (101, 102) by considering at least one of the following:
• a reference velocity of the current lane (CL),
• a reference velocity of the adjacent lane (AL),
• a desired lane (CL, AL) of the automated vehicle (EGO), with the desired lane (CL, AL) being either the current lane (CL) or the adjacent lane (AL),
• a distance to an end of the current lane (CL),
• a lateral deviation of the automated vehicle (EGO) from the center of the current lane (CL),
• a lateral deviation of the automated vehicle (EGO) from the center of the adjacent lane (AL),
• an expected number of actions required for the overall merging maneuver, and/or
• a collisions of the automated vehicle (EGO) with the at least one other road user (RU1).

7. A system according to any of the previous claims, with the system configured to:
• predict a future behavior (401, 402, 403, 404) of the at least one other road user (RU1) for at least one future point in time considering at least a virtual future guidance action (301, 302) of the automated vehicle (EGO),
• evaluate the at least one virtual guidance action (301, 302) considering the predicted future behavior (401, 402, 403, 404) of the at least one other road user (RU1), and
• evaluate a guidance action (102) considering at least one virtual guidance action (301, 302) that may follow on that action (102) in a future point in time.

8. A system according to claim 7, with the system configured to:
• predict the future behavior (401, 402, 403, 404) of the at least one other road user (RU1) by selecting a guidance action from a finite set of other road user guidance actions.

9. A system according to claim 8, with the system configured to:
• predict the future behavior (401, 402, 403, 404) of the at least one other road user (RU1) for at least one first future point in time by selecting a guidance action from a finite set of other road user guidance actions, and
• predict the future behavior (601) of the at least one other road user (RU1) for at least one second future point in time, where the at least one second future point in time is following on the at least one first future point time, by assuming that the at least one other road user (RU1) is moving with a constant velocity.

10. A system according to any of the claims 7, 8 or 9, with the system configured to:
• evaluate the guidance actions (101, 102) at least two times,
• with the predicted future behavior (401, 402, 403, 404, 601) of the at least one other road user (RU1) differing in at least one future point in time, and/or
• with the virtual future guidance action (301, 302, 501) of the automated vehicle (EGO) differing in at least one future point in time;
• select a guidance action (101, 102) considering at least two evaluations of the guidance actions (101, 102).

11. Method for performing a merging maneuver of an automated vehicle (EGO), with the automated vehicle (EGO) merging from a current lane (CL) into an adjacent lane (AL), with the merging maneuver requiring at least one other road user (RU1) on the adjacent lane (AL) to yield to the automated vehicle (EGO), with the method comprising the steps of:
• detecting the at least one other road user (RU1) on the adjacent lane (AL);
• evaluating at least two guidance actions (101, 102) for the automated vehicle (EGO);
• selecting one guidance action (101) of the evaluated guidance actions (101, 102) considering the evaluation;
• guiding (g1) the automated vehicle (EGO) in such a way that the at least one other road user (RU1) understands that the automated vehicle (EGO) intends to merge in front of the at least one other road user (RU1) by performing the selected guidance action (101);
• determining if the at least one other road user (RU1) yields to the automated vehicle (EGO); and
• guiding (g2) the automated vehicle (EGO) to merge in front of the at least one other road user (RU1), if it is determined that the at least one other road user (RU1) yields to the automated vehicle (EGO).

## Patentansprüche

1. System zum Durchführen eines Einfädelmanövers eines automatisierten Fahrzeugs (EGO), wobei das automatisierte Fahrzeug (EGO) von einer aktuellen Fahrbahn (CL) in eine benachbarte Fahrbahn (AL) einfädelt, wobei das Einfädelmanöver mindestens einen anderen Verkehrsteilnehmer (RU1) auf der benachbarten Fahrbahn (AL) erfordert, um dem automatisierten Fahrzeug (EGO) die Vorfahrt zu gewähren, wobei das System konfiguriert ist:
• den mindestens einen anderen Verkehrsteilnehmer (RU1) auf der benachbarten Fahrbahn (AL) zu detektieren;
• mindestens zwei Steuerungsmaßnahmen (101, 102) für das automatisierte Fahrzeug (EGO) zu bewerten;
• eine Steuerungsmaßnahme (101) der bewerteten Steuerungsmaßnahmen (101, 102) unter Berücksichtigung der Bewertung auszuwählen;
• das automatisierte Fahrzeug (EGO) derart zu steuern (g1), dass der mindestens eine andere Verkehrsteilnehmer (RU1) versteht, dass das automatisierte Fahrzeug (EGO) beabsichtigt, durch das Durchführen der ausgewählten Steuerungsmaßnahme (101) vor dem mindestens einen anderen Verkehrsteilnehmer (RU1) einzufädeln;
• zu bestimmen, ob der mindestens eine andere Verkehrsteilnehmer (RU1) dem automatisierten Fahrzeug (EGO) Vorfahrt gewährt; und
• das automatisierte Fahrzeug (EGO) zu steuern (g2), vor dem mindestens einen anderen Verkehrsteilnehmer (RU1) einzufädeln, wenn bestimmt worden ist, dass der mindestens eine andere Verkehrsteilnehmer (RU1) dem automatisierten Fahrzeug (EGO) Vorfahrt gewährt.

2. System nach Anspruch 1, wobei das System konfiguriert ist:
• einen zweiten anderen Verkehrsteilnehmer (RU2) zu detektieren, wobei der zweite andere Verkehrsteilnehmer (RU2) dem mindestens einen anderen Verkehrsteilnehmer (RU1) folgt, wenn bestimmt wird, dass der mindestens eine andere Verkehrsteilnehmer (RU1) dem automatisierten Fahrzeug (EGO) nicht Vorfahrt gewährt;
• das automatisierte Fahrzeug (EGO) derart zu steuern (g1), dass der zweite andere Verkehrsteilnehmer (RU2) versteht, dass das automatisierte Fahrzeug (EGO) beabsichtigt, vor dem zweiten anderen Verkehrsteilnehmer (RU2) einzufädeln;
• zu bestimmen, ob der zweite andere Verkehrsteilnehmer (RU2) dem automatisierten Fahrzeug (EGO) Vorfahrt gewährt; und
• das automatisierte Fahrzeug (EGO) zu steuern (g3), vor dem zweiten anderen Verkehrsteilnehmer (RU2) einzufädeln, wenn bestimmt wird, dass der zweite andere Verkehrsteilnehmer (RU2) dem automatisierten Verkehrsteilnehmer (EGO) Vorfahrt gewährt.

3. System nach einem der vorhergehenden Ansprüche, wobei das System konfiguriert ist:
• das automatisierte Fahrzeug (EGO) derart zu steuern (g1), dass der mindestens eine andere Verkehrsteilnehmer (RU1) versteht, dass das automatisierte Fahrzeug (EGO) beabsichtigt, vor dem mindestens einen anderen Verkehrsteilnehmer (RU1) einzufädeln, indem es das automatisierte Fahrzeug (EGO) in Längsrichtung zumindest bis zu der gleichen Höhe wie der mindestens eine andere Verkehrsteilnehmer (RU1) steuert.

4. System nach einem der vorhergehenden Ansprüche, wobei das System konfiguriert ist:
• das automatisierte Fahrzeug (EGO) derart zu steuern (g1), dass der mindestens eine andere Verkehrsteilnehmer (RU1) versteht, dass das automatisierte Fahrzeug (EGO) beabsichtigt, vor dem mindestens einen anderen Verkehrsteilnehmer (RU1) einzufädeln, indem es das automatisierte Fahrzeug (EGO) in der aktuelle Fahrbahn (CL) lateral in Richtung der benachbarten Fahrbahn (AL) steuert.

5. System nach einem der vorhergehenden Ansprüche, wobei das System konfiguriert ist:
• eine erste Steuerungsmaßnahme (101) auszuwählen, die mit größerer Wahrscheinlichkeit eine Reaktion von dem mindestens einen anderen Verkehrsteilnehmer (RU1) auslöst als die mindestens eine andere zweite Steuerungsmaßnahme (102).

6. System nach einem der vorhergehenden Ansprüche, wobei das System konfiguriert ist:
• die Steuerungsmaßnahmen (101, 102) unter Berücksichtigung mindestens eines der folgenden Punkte zu bewerten:
∘ eine Referenzgeschwindigkeit der aktuellen Fahrbahn (CL),
∘ eine Referenzgeschwindigkeit der benachbarten Fahrbahn (AL),
∘ eine gewünschte Fahrbahn (CL, AL) des automatisierten Fahrzeugs (EGO), wobei die gewünschte Fahrbahn (CL, AL) entweder die aktuelle Fahrbahn (CL) oder die benachbarte Fahrbahn (AL) ist,
∘ eine Entfernung zu einem Ende der aktuellen Fahrbahn (CL),
∘ eine laterale Abweichung des automatisierten Fahrzeugs (EGO) von dem Zentrum der aktuellen Fahrbahn (CL),
∘ eine laterale Abweichung des automatisierten Fahrzeugs (EGO) von dem Zentrum der benachbarten Fahrbahn (AL),
∘ eine erwartete Zahl von Maßnahmen, die für das gesamte Einfädelmanöver erforderlich ist, und/oder
∘ eine Kollision des automatisierten Fahrzeugs (EGO) mit dem mindestens einen anderen Verkehrsteilnehmer (RU1).

7. System nach einem der vorhergehenden Ansprüche, wobei das System konfiguriert ist:
• ein zukünftiges Verhalten (401, 402, 403, 404) des mindestens einen anderen Verkehrsteilnehmers (RU1) für mindestens einen zukünftigen Zeitpunkt unter Berücksichtigung zumindest einer virtuellen zukünftigen Steuerungsmaßnahme (301, 302) des automatisierten Fahrzeugs (EGO) vorherzusagen,
• die mindestens eine virtuelle Steuerungsmaßnahme (301, 302) unter Berücksichtigung des vorhergesagten zukünftigen Verhaltens (401, 402, 403, 404) des mindestens einen anderen Verkehrsteilnehmers (RU1) zu bewerten, und
• eine Steuerungsmaßnahme (102) unter Berücksichtigung mindestens einer virtuellen Steuerungsmaßnahme (301, 302), die zu einem zukünftigen Zeitpunkt auf diese Maßnahme folgen kann, zu bewerten.

8. System nach Anspruch 7, wobei das System konfiguriert ist:
• das zukünftige Verhalten (401, 402, 403, 404) des mindestens einen anderen Verkehrsteilnehmers (RU1) durch Auswählen einer Steuerungsmaßnahme aus einem endlichen Satz von Steuerungsmaßnahmen anderer Verkehrsteilnehmer vorherzusagen.

9. System nach Anspruch 8, wobei das System konfiguriert ist:
• das zukünftige Verhalten (401, 402, 403, 404) des mindestens einen anderen Verkehrsteilnehmers (RU1) für mindestens einen ersten zukünftigen Zeitpunkt durch Auswählen einer Steuerungsmaßnahme aus einem endlichen Satz von Steuerungsmaßnahmen anderer Verkehrsteilnehmer vorherzusagen, und
• das zukünftige Verhalten (601) des mindestens einen anderen Verkehrsteilnehmers (RU1) für mindestens einen zweiten zukünftigen Zeitpunkt, wobei der mindestens eine zweite zukünftige Zeitpunkt auf den mindestens einen ersten zukünftigen Zeitpunkt folgt, durch die Annahme, dass sich der mindestens eine andere Verkehrsteilnehmer (RU1) mit einer konstanten Geschwindigkeit bewegt, vorherzusagen.

10. System nach einem der Ansprüche 7, 8 oder 9, wobei das System konfiguriert ist:
• die Steuerungsmaßnahmen (101, 102) mindestens zweimal zu bewerten,
∘ wobei sich das vorhergesagte zukünftige Verhalten (401, 402, 403, 404, 601) des mindestens einen anderen Verkehrsteilnehmers (RU1) an mindestens einem zukünftigen Zeitpunkt unterscheidet, und/oder
∘ wobei sich die virtuelle zukünftige Steuerungsmaßnahme (301, 302, 501) des automatisierten Fahrzeugs (EGO) an mindestens einem zukünftigen Zeitpunkt unterscheidet;
• eine Steuerungsmaßnahme (101, 102) unter Berücksichtigung von mindestens zwei Bewertungen der Steuerungsmaßnahmen (101, 102) auszuwählen.

11. Verfahren zum Durchführen eines Einfädelmanövers eines automatisierten Fahrzeugs (EGO), wobei das automatisierte Fahrzeug (EGO) von einer aktuellen Fahrbahn (CL) in eine benachbarte Fahrbahn (AL) einfädelt, wobei das Einfädelmanöver mindestens einen anderen Verkehrsteilnehmer (RU1) auf der benachbarten Fahrbahn (AL) erfordert, um dem automatisierten Fahrzeug (EGO) Vorfahrt zu gewähren, wobei das Verfahren die folgenden Schritte umfasst:
• Detektieren des mindestens einen anderen Verkehrsteilnehmers (RU1) auf der benachbarten Fahrbahn (AL);
• Bewerten von mindestens zwei Steuerungsmaßnahmen (101, 102) für das automatisierte Fahrzeug (EGO);
• Auswählen einer Steuerungsmaßnahme (101) der bewerteten Steuerungsmaßnahmen (101, 102) unter Berücksichtigung der Bewertung;
• Steuern (g1) des automatisierten Fahrzeugs (EGO) derart, dass der mindestens eine andere Verkehrsteilnehmer (RU1) versteht, dass das automatisierte Fahrzeug (EGO) beabsichtigt, durch Durchführen der ausgewählten Steuerungsmaßnahme (101) vor dem mindestens einen anderen Verkehrsteilnehmer (RU1) einzufädeln;
• Bestimmen, ob der mindestens eine andere Verkehrsteilnehmer (RU1) dem automatisierten Fahrzeug (EGO) Vorfahrt gewährt; und
• Steuern (g2) des automatisierten Fahrzeugs (EGO), um vor dem mindestens einen anderen Verkehrsteilnehmer (RU1) einzufädeln, wenn bestimmt wird, dass der mindestens eine andere Verkehrsteilnehmer (RU1) dem automatisierten Fahrzeug (EGO) Vorfahrt gewährt.

## Revendications

1. Système pour exécuter une manoeuvre d'insertion dans le flux de circulation d'un véhicule automatisé (EGO), le véhicule automatisé (EGO) s'insérant dans le flux de circulation à partir d'une voie actuelle (CL) jusque dans une voie adjacente (AL), la manoeuvre d'insertion dans le flux de circulation nécessitant qu'au moins un autre usager de la route (RU1) sur la voie adjacente (AL) cède le passage au véhicule automatisé (EGO), ledit système étant configuré pour :
• détecter l'au moins un autre usager de la route (RU1) sur la voie adjacente (AL) ;
• évaluer au moins deux actions de guidage (101, 102) pour le véhicule automatisé (EGO) ;
• sélectionner une action de guidage (101) parmi les actions de guidage (101, 102) évaluées compte tenu de l'évaluation ;
• guider (g1) le véhicule automatisé (EGO) de telle manière que l'au moins un autre usager de la route (RU1) comprenne que le véhicule automatisé (EGO) a l'intention de s'insérer dans le flux de circulation devant l'au moins un autre usager de la route (RU1) en exécutant l'action de guidage (101) sélectionnée ;
• déterminer si l'au moins un autre usager de la route (RU1) cède le passage au véhicule automatisé (EGO) ; et
• guider (g2) le véhicule automatisé (EGO) pour qu'il s'insère dans le flux de circulation devant l'au moins un autre usager de la route (RU1), s'il est déterminé que l'au moins un autre usager de la route (RU1) cède le passage au véhicule automatisé (EGO).

2. Système selon la revendication 1, le système étant configuré pour :
• détecter un deuxième autre usager de la route (RU2), le deuxième autre usager de la route (RU2) suivant l'au moins un autre usager de la route (RU1), s'il est déterminé que l'au moins un autre usager de la route (RU1) ne cède pas le passage au véhicule automatisé (EGO) ;
• guider (g1) le véhicule automatisé (EGO) de telle manière que le deuxième autre usager de la route (RU2) comprenne que le véhicule automatisé (EGO) a l'intention de s'insérer dans le flux de circulation devant le deuxième autre usager de la route (RU2) ;
• déterminer si le deuxième autre usager de la route (RU2) cède le passage au véhicule automatisé (EGO) ; et
• guider (g3) le véhicule automatisé (EGO) pour qu'il s'insère dans le flux de circulation devant le deuxième autre usager de la route (RU2), s'il est déterminé que le deuxième autre usager de la route (RU2) cède le passage au véhicule automatisé (EGO) .

3. Système selon l'une quelconque des revendications précédentes, le système étant configuré pour :
• guider (g1) le véhicule automatisé (EGO) de telle manière que l'au moins un autre usager de la route (RU1) comprenne que le véhicule automatisé (EGO) a l'intention de s'insérer dans le flux de circulation devant l'au moins un autre usager de la route (RU1) en guidant le véhicule automatisé (EGO) dans une direction longitudinale au moins jusqu'au même niveau que l'au moins un autre usager de la route (RU1).

4. Système selon l'une quelconque des revendications précédentes, le système étant configuré pour :
• guider (g1) le véhicule automatisé (EGO) de telle manière que l'au moins un autre usager de la route (RU1) comprenne que le véhicule automatisé (EGO) a l'intention de s'insérer dans le flux de circulation devant l'au moins un autre usager de la route (RU1) en guidant le véhicule automatisé (EGO) latéralement dans la voie actuelle (CL) en direction de la voie adjacente (AL).

5. Système selon l'une quelconque des revendications précédentes, le système étant configuré pour :
• sélectionner une première action de guidage (101) qui est davantage susceptible de déclencher une réaction de la part de l'au moins un autre usager de la route (RU1) qu'au moins une autre deuxième action de guidage (102).

6. Système selon l'une quelconque des revendications précédentes, le système étant configuré pour :
• évaluer les actions de guidage (101, 102) en tenant compte d'au moins un des éléments suivants :
• une vitesse de référence de la voie actuelle (CL),
• une vitesse de référence de la voie adjacente (AL),
• une voie souhaitée (CL, AL) du véhicule automatisé (EGO), la voie souhaitée (CL, AL) étant soit la voie actuelle (CL), soit la voie adjacente (AL),
• une distance jusqu'à une extrémité de la voie actuelle (CL),
• un écart latéral du véhicule automatisé (EGO) par rapport au centre de la voie actuelle (CL),
• un écart latéral du véhicule automatisé (EGO) par rapport au centre de la voie adjacente (AL),
• un nombre attendu d'actions nécessaires à la manoeuvre globale d'insertion dans le flux de circulation, et/ou
• une collision du véhicule automatisé (EGO) avec l'au moins un autre usager de la route (RU1).

7. Système selon l'une quelconque des revendications précédentes, le système étant configuré pour :
• prédire un comportement futur (401, 402, 403, 404) de l'au moins un autre usager de la route (RU1) à au moins un moment futur compte tenu d'au moins une action de guidage future virtuelle (301, 302) du véhicule automatisé (EGO),
• évaluer l'au moins une action de guidage virtuelle (301, 302) compte tenu du comportement futur (401, 402, 403, 404) prédit de l'au moins un autre usager de la route (RU1), et
• évaluer une action de guidage (102) compte tenu d'au moins une action de guidage virtuelle (301, 302) susceptible de faire suite à cette action (102) à un moment futur.

8. Système selon la revendication 7, le système étant configuré pour :
• prédire le comportement futur (401, 402, 403, 404) de l'au moins un autre usager de la route (RU1) en sélectionnant une action de guidage dans un ensemble fini d'autres actions de guidage d'usager de la route.

9. Système selon la revendication 8, le système étant configuré pour :
• prédire le comportement futur (401, 402, 403, 404) de l'au moins un autre usager de la route (RU1) à au moins un premier moment futur en sélectionnant une action de guidage dans un ensemble fini d'autres actions de guidage d'usager de la route, et
• prédire le comportement futur (601) de l'au moins un autre usager de la route (RU1) à au moins un deuxième moment futur, l'au moins un deuxième moment futur faisant suite à l'au moins un premier moment futur, en supposant que l'au moins un autre usager de la route (RU1) se déplace à vitesse constante.

10. Système selon l'une quelconque des revendications 7, 8 ou 9, le système étant configuré pour :
• évaluer les actions de guidage (101, 102) au moins deux fois,
• le comportement futur (401, 402, 403, 404, 601) prédit de l'au moins un autre usager de la route (RU1) étant différent à au moins un moment futur, et/ou
• l'action de guidage future virtuelle (301, 302, 501) du véhicule automatisé (EGO) étant différente à au moins un moment futur ;
• sélectionner une action de guidage (101, 102) compte tenu d'au moins deux évaluations des actions de guidage (101, 102).

11. Procédé d'exécution d'une manoeuvre d'insertion dans le flux de circulation d'un véhicule automatisé (EGO), le véhicule automatisé (EGO) s'insérant dans le flux de circulation à partir d'une voie actuelle (CL) jusque dans une voie adjacente (AL), la manoeuvre d'insertion dans le flux de circulation nécessitant qu'au moins un autre usager de la route (RU1) sur la voie adjacente (AL) cède le passage au véhicule automatisé (EGO), le procédé comprenant les étapes suivantes :
• détection de l'au moins un autre usager de la route (RU1) sur la voie adjacente (AL) ;
• évaluation d'au moins deux actions de guidage (101, 102) pour le véhicule automatisé (EGO) ;
• sélection d'une action de guidage (101) parmi les actions de guidage (101, 102) évaluées compte tenu de l'évaluation ;
• guidage (g1) du véhicule automatisé (EGO) de telle manière que l'au moins un autre usager de la route (RU1) comprenne que le véhicule automatisé (EGO) a l'intention de s'insérer dans le flux de circulation devant l'au moins un autre usager de la route (RU1) par exécution de l'action de guidage (101) sélectionnée ;
• détermination si l'au moins un autre usager de la route (RU1) cède le passage au véhicule automatisé (EGO) ; et
• guidage (g2) du véhicule automatisé (EGO) pour qu'il s'insère dans le flux de circulation devant l'au moins un autre usager de la route (RU1), s'il est déterminé que l'au moins un autre usager de la route (RU1) cède le passage au véhicule automatisé (EGO).
